# EUROPEAN PATENT APPLICATION

(11) **EP 4 726 712 A2**
(43) Date of publication of application: **15.04.2026**
(21) Application number: 26160368.2
(22) Date of filing: 09.11.2021
(51) Int. Cl.: G10L 15/18

(54) **SELECTIVELY GENERATING AND/OR SELECTIVELY RENDERING CONTINUING CONTENT FOR SPOKEN UTTERANCE COMPLETION**

(62) Divisional of application: 21820039.2
(71) Applicant: Google LLC, Mountain View, CA 94043 (US)
(72) Inventor: PETROU, David, Mountain View, 94043 (US); SHARIFI, Matthew, Mountain View, 94043 (US)
(74) Representative: Davis, Steven George

(57) **Abstract**

Implementations set forth herein relate to generating and rendering continuing content (e.g., natural language content) that can be used, by a human user, in completing a partial spoken utterance of the user. The continuing content can be rendered via a wearable device (e.g., earbuds or eyeglasses). In various implementations, generating and/or rendering of the continuing content can be performed automatically (at least when certain condition(s) are satisfied) responsive to the partial spoken utterance and independent of any user input(s) that explicitly invokes the generating and/or the rendering. Furthermore, in many implementations, at least rendering of the continuing content is selectively performed. For example, automatic rendering of the continuing content can be selectively performed when certain condition(s) are satisfied, such as detection of a disfluency following the partial spoken utterance.

## Description

### Background

Search engines, automated assistants, and other applications have facilitated the flow of information from various electronic sources to humans. However, when particular information is sought by a user at a particular time, there can be significant latency in obtaining the particular information from one of those applications and/or there can be significant utilization of client device resources in obtaining the particular information.

As one example, assume a user is assisting a friend with a smart thermostat installation and speaks the utterance "the HVAC fan wire is", then pauses their utterance upon realizing they are unsure of the typical color of the wire that controls the fan. In such an example, the user could resolve the typical color of the wire that controls the fan utilizing, for example, a search engine or an automated assistant. However, there can be significant latency between the time the user realizes they are unsure of the color and actually resolving the color. Further, resolving the color can utilize significant client device resources.

For instance, resolving the typical fan wire color via a search engine can require accessing a client device (e.g., smartphone) to launch a browser, then navigating to a search engine page via the browser, then determining how to formulate an appropriate query for submission via the search engine page, then inputting (e.g., speaking or typing) the query, submitting the query, and reviewing results and/or clicking through to underlying resources to resolve the color. In addition to taking a significant amount of time (resulting in latency of resolution), significant resources of the smartphone are utilized. For example, client device resources are utilized in launching the browser and keeping the smartphone display active throughout: navigating to the search engine page, determining how to formulate the appropriate query, and reviewing results and/or underlying resources. For instance, the client device display can be kept active throughout those processes and, further, client device processor resources can be required in: launching the browser, rendering graphical content throughout those processes, etc.

Also, for instance, resolving the typical fan wire color via an automated assistant can require explicitly invoking the automated assistant (e.g., by speaking a wake phrase), determining how to formulate an appropriate query for submission via the automated assistant, speaking the query, and reviewing result(s) from the assistant. Notably, due to syntactical requirements of automated assistants, to obtain correct (or any) result(s) the formulated query may need to be longer than the user's utterance of "the HVAC fan wire is" *(e.g.,* "the HVAC fan wire is" may lead to an error by the assistant). For example, it may need to start with "What" and/or include the term "color" (e.g., "what color is an HVAC fan wire"). This can result in processing of lengthier queries and/or in processing of multiple queries as a user attempts to formulate a query with the appropriate syntax. Also, notably, the rendered result(s) may include more than just the correct answer (green). For example, the rendered result(s) may restate part of the query *(e.g.,* "the HVAC fan wire is typically green") and/or may include additional information (e.g., "the HVAC fan wire is green and it connects to terminal G on your thermostat"). Further, the rendered result(s) may be rendered in their entirety, with no option to halt rendering or only high latency option(s) to halt rendering (e.g., tapping a rendered "cancel" software button, speaking a wake phrase and "stop", etc.). This can result in rendering of additional content that is in addition to the content needed to satisfy the user's information request.

### Summary

Implementations set forth herein relate to generating and rendering continuing content (e.g., natural language content) that can be used, by a human user, in completing a partial spoken utterance (e.g., partial spoken utterance of the user). As one example, assume a user is wearing earbud(s) and speaks, during a conversation with another person, the partial spoken utterance of "the HVAC fan wire is." Audio data, detected using microphone(s) of the earbud(s) and capturing the spoken utterance, can be processed according to techniques disclosed herein to determine continuing content that is the natural language content "green." Further, the word "green" can be rendered as synthesized speech output (optionally at a fast rate and/or a reduced volume) via speaker(s) of the earbud(s) to provide the user with the natural language content needed for completing the partial spoken utterance. In these and other manners, the need to utilize significant computational resources in otherwise resolving that "green" would complete the partial spoken utterance, is avoided. For example, there is no need to utilize client device resources in explicitly invoking an automated assistant, accessing a search engine interface, formulating and submitting an appropriate query thereto, and/or rendering result(s) responsive to the appropriate query. Further, the audible rendering of the word "green" can be generated and/or rendered with minimal latency. Yet further, "green" may be at least rendered only selectively (e.g., when a disfluency is detected after the partial spoken utterance), thereby mitigating computationally wasteful unnecessary rendering of "green".

In various implementations, generating and/or rendering of the continuing content can be performed automatically (at least when certain condition(s) are satisfied) responsive to the partial spoken utterance and independent of any user input(s) that explicitly invokes the generating and/or the rendering. In these and other manners, the continuing content can be rendered with reduced latency, at least due to obviating the need to await certain explicit input(s) before generating and/or rendering the continuing content. For example, the need to speak an invoking wake phrase (e.g., "OK Assistant") or physically interact with an invoking software or hardware button can be eliminated.

Furthermore, in many implementations, at least rendering of the continuing content is selectively performed. For example, automatic rendering of the continuing content can be selectively performed when certain condition(s) are satisfied. Those condition(s) can include, or be based on, whether a disfluency is detected following the partial spoken utterance, a duration of a detected disfluency, which modality or modalities are available for rendering the continuing content, feature(s) of the continuing content, and/or other factor(s). In these and other manners, the automatic rendering can be performed only when certain condition(s) are satisfied. This can prevent computationally-wasteful rendering of content in situations where it is not advantageous, while still enabling automatic rendering of content (without first requiring explicit input(s)) in alternate situations where it is advantageous. Accordingly, implementations seek to balance the efficiencies achieved by reduced latency rendering of continuing content with the inefficiencies incurred by wasteful rendering of non-advantageous content.

As one example of selectively rendering the continuing content, determining to automatically render continuing content can be contingent on detecting a disfluency, or detecting a disfluency of at least a threshold duration. In some implementations, detecting a disfluency and/or a duration of a disfluency can be based on processing audio data of the partial spoken utterance and/or audio data that follows (*e.g*., immediately follows) the partial utterance. For example, the audio data can be processed to detect absence of human speech or other disruptions of human speech that are indicative of a disfluency (*e.g*., an "ummmmm" or an "eeehh"). In some implementations, detecting a disfluency and/or a duration of a disfluency can additionally or alternatively be based on reading(s) from motion sensor(s) of the auxiliary device. For example, reading(s) from an inertial measurement unit (IMU), accelerometer, and/or other motion sensor(s) of the auxiliary device can indicate when the user is speaking and when the user is not speaking.

As another example, determining to automatically render continuing content can be contingent on an entropy metric, a confidence metric, and/or other metric for the continuing content satisfying threshold(s). For instance, an entropy metric for continuing content text can be based on inverse document frequency (IDF) measure(s) for the text *(e.g.,* IDF measure for text as a whole and/or for individual term(s) of the text). As a particular instance, continuing content text of "cat" would have a low IDF measure as it frequently occurs in resources of a corpus *(e.g.,* a subset of internet resources), whereas continuing content text of "rhododendron" would have a higher IDF measure as it less frequently occurs in the documents of the corpus. In some implementations, the IDF measure of a term can be personal to the user, in that it's based at least in part on occurrence in resources of the user, such as personal documents and/or past speech recognition hypotheses generated (with prior permission from the user) based on past spoken utterances of the user. As another example, a confidence metric can be based on one or more measures that indicate whether the continuing content is indeed correct for completing the partial spoken utterance. For instance, the confidence metric can be based on how closely the continuing content matches a query automatically generated and utilized in retrieving the continuing content. Also, for instance, the confidence metric can be based on a measure, generated using a language model, that indicates how likely the complete utterance (the partial spoken utterance appended with the continuing content) is to be utilized and/or otherwise appear in a given language.

As a further example, determining whether to automatically render continuing content can be based on which modality or modalities are available for rendering the continuing content. For example, when the auxiliary device has a display that is not being used (or can be temporarily overridden), then continuing content can be more likely to be automatically rendered via the display as compared to when the auxiliary device has only speaker(s) (e.g., lacks a display and/or the display cannot currently be utilized) for rendering the continuing content. In these and other manners, continuing content can, in some implementations, be more likely to be exclusively visually rendered when a display is available, as this can be less distracting and more natural for the user as opposed to an audible rendering of the continuing content.

As yet another example, determining whether to automatically render continuing content can be based on factor(s) described above, but not necessarily contingent on any one of the factor(s) individually satisfying condition(s). For instance, it can be based on whether a combination score, that is based on multiple of the factor(s), satisfies a threshold or other condition. In some implementations, the combination score can be generated by combining (optionally weighted) a disfluency metric (e.g., 1 if disfluency 0 if no disfluency), a disfluency duration metric *(e.g.,* scaled from 0 to 1 based on duration), an entropy metric, a confidence metric, a display metric (e.g., 1 if available 0 if unavailable), and/or other metric(s) (the metrics can optionally be normalized prior to combining).

In some other implementations, the combination score can be generated by processing, using a machine learning model, the disfluency metric, the disfluency duration metric, the entropy metric, the confidence metric, and/or other metric(s) (optionally normalized). For example, the machine learning model can be a classifier that produces output between 0 and 1 (e.g., with 1 indicating the best score), and the combination score can be the output and can be satisfied if the output exceeds 0.7 or other threshold. The machine learning model can be trained using implicit or explicit user feedback signals, and can optionally be personalized to a user. For example, it can be personalized to the user through training (exclusively or heavily) based on feedback signal(s) from that user. Additionally or alternatively, it can be personalized by adjusting the threshold (against which output from the model is compared) for the user *(e.g.,* adjusting it up if feedback signal(s) from that user indicate over-triggering of rendering). Through personalization of the machine learning model, occurrences of erroneously suppressing rendering and/or occurrences of erroneously rendering can be further mitigated.

As one example of generating a training example based on implicit feedback signals, a positive training example can be generated based on continuing content text being rendered, the user speaking the continuing content text (or a close match thereto), and the user speaking the continuing content text after the rendering is complete (or at least 90% or other threshold complete). For instance, the positive training example can include the input features to the machine learning model for that situation, and a labeled output of "1". As another example, a negative training example can be generated based on continuing content text being rendered and the user (a) speaking alternate continuing content text (e.g., that is not a close match) and/or (b) speaking the continuing content text, but doing so early in the rendering (e.g., when the rendering is less than 40% or other threshold complete - indicating the rendering was not needed). In both of those examples, the continuing content text actually spoken can be determined based on automatic speech recognition of the continuing content text.

In various implementations, during rendering of the continuing content, monitoring for voice activity of the user can be performed (e.g., based on processing the audio data and/or based on sensor reading(s) from motion sensor(s) of the auxiliary device). In some of those implementations, halting of the rendering of the continuing content can occur responsive to detecting voice activity of the user. For example, assume the continuing content is "utility model patent" and the rendering is an audible rendering of the continuing content (e.g., using speech synthesis). If voice activity of the user is detected after only "utility model" is rendered (and before "patent" is rendered), rendering can be halted thereby preventing "patent" from being rendered. This can conserve computational resources as the term "patent" need not be rendered. Further, this can be more natural and resonate with the user, as the user is likely already starting to speak "utility model patent" in its entirety, having been triggered by the partial rendering. Optionally, the spoken utterance of the user, that led to the halting, can be processed using automatic speech recognition to verify that the rendering should continue to be halted. For instance, and continuing with the prior example, if the speech recognition indicates the spoken utterance was "hold on" or "give me a minute" or similar, then the halting can cease and the remainder of the continuing content rendered.

In some implementations, certain continuing content can purposefully be rendered in multiple discrete chunks *(i.e.,* segments). For example, an address may be provided with a first chunk that is the street address, a second chunk that is the city and state, and a third chunk that is the zip code. In those implementations, the first chunk can be rendered initially without then automatically rendering the second chunk. Further, rendering of the second chunk can be dependent on first detecting voice activity during or after rendering of the first chunk, and detecting cessation of that voice activity. This ensures the user is able to complete speaking of the first chunk, before the second chunk is rendered, which can be more natural for the user. Optionally, rendering of the second chunk can further be dependent on automatic speech recognition verifying that contents of the first chunk were present in the spoken utterance that caused the detected voice activity. Further, rendering of the third chunk can be dependent on detecting voice activity during or after rendering of the second chunk, and detecting cessation of that voice activity. Optionally, rendering of the third chunk can further be dependent on automatic speech recognition verifying that contents of the third chunk were present in the spoken utterance that caused the detected voice activity.

Various techniques can be utilized in generating the continuing content. In some implementations, generating the continuing content can be selectively performed. For example, it can be performed in response to detecting any spoken utterance or detecting a spoken utterance and verifying it is from a user of the auxiliary device. Verifying the spoken utterance is from the user of the auxiliary device can be based on text-independent speaker verification. Verifying the spoken utterance is from the user can additionally or alternatively be based on automatic speech recognition being speaker-dependent and the automatic speech recognition having generated at least one predicted hypothesis for the spoken utterance when the speaker-dependent speaker is the user. Put another way, the spoken utterance can be verified to be from the user when speaker-dependent automatic speech recognition is being performed that is specific to the user, and the automatic speech recognition generates at least one speech recognition hypothesis. Speaker-dependent automatic speech recognition may generate a predicted hypothesis or predicted hypotheses only when audio data is from the user. For example, with speaker-dependent automatic speech recognition a voice embedding of the user is processed along with the audio data, to generate predicted hypotheses for only portions of the audio data that conform to the voice embedding. As another example, generating the continuing content can be performed further in response to detecting the auxiliary device is being actively worn by user and/or detecting the auxiliary device is a certain environmental context (e.g., a certain location, a certain type of location (e.g., private location), a certain time of day, a certain day of the week).

As one example of generating the continuing content, a speech recognition hypothesis, of the partial spoken utterance, can be processed using a machine learning model to generate following content output that indicates one or more features of further content that is predicted to follow the partial spoken utterance. For example, the machine learning model can be a language model trained to predict a likely next word(s) for a partial statement, based on processing features (e.g., text of) the partial statement. The machine learning model can be, for example, a transformer model or a memory network *(e.g.,* a long-short-term memory (LSTM) model). In some implementations, the machine learning model can be a language model (LM).

In some implementations, the following content output indicates next word(s) and those predicted next word(s) can be used as the continuing content. In some other implementations, the predicted next word(s) can be used in identifying the continuing content, but the continuing content will vary from the predicted next words. For example, an entity type of the predicted next word(s) can be determined (e.g., using an entity detector), and that entity type and term(s) of the speech recognition hypothesis can be used in performing a search. Further, the continuing content can be determined from a resource that is responsive to the search. Performing the search using the predicted entity type and the one or more predicted terms can include determining that a database entry resource (e.g., from a public or personal knowledge graph) is indexed with both the predicted entity type and the one or more hypothesis terms, and determining the continuing content from the database entry. Performing the search using the predicted entity type and the one or more predicted terms can alternately include identifying the resource using the one or more hypothesis terms and extracting, from a superset of text of the resource, the additional text based on the additional text being of the predicted entity type.

As a particular example, assume the partial spoken utterance of "the capital of Kentucky is." A speech recognition hypothesis of "the capital of Kentucky is" can be processed using a language model to generate predicted continuing content of "Louisville." Notably, "Louisville" is inaccurate (Louisville is not the capital of Kentucky), but such inaccuracies could occur from a machine learned model. Nonetheless, a search can be performed using term(s) from the hypothesis and an entity type *(e.g.,* "city") determined based on the predicted continuing content of "Louisville." For example, a search of a knowledge graph can be performed to identify a node that is of a "city" type and that is also indexed by *(e.g.,* has directed edges to corresponding nodes) "capital" and "Kentucky." The identified node will include an alias of "Frankfort," which can be used as the continuing content to be rendered. As another example, a search can be performed to identify a resource *(e.g.,* a webpage) that is responsive to "the capital of Kentucky is." Further, the snippet of text "Frankfort" can be extracted from the resource and utilized as the continuing content responsive to it being of a "city" entity type. In these and other manners, a language model can be utilized to enable more efficient resolution of accurate continuing content, thereby mitigating occurrences of computationally wasteful rendering of inaccurate content.

Additional and/or alternative techniques can be utilized in generating the continuing content. For example, embedding based lookups can be performed. For instance, an embedding can be generated based on the recognition hypothesis, and that embedding compared to pre-computed embeddings, that are each for a different fact. Further, one of the facts can be selected as the continuing content responsive to the comparison indicating the distance between its embedding and the recognition embedding satisfies a threshold(s). For instance, it can be selected based on the distance being the minimal distance among the recognition embedding and all pre-computed embeddings, and based on the distance satisfying an absolute threshold.

In some implementations, one or more aspects described herein can be performed locally at the auxiliary device, or another client device in communication with the auxiliary device (e.g., a smartphone paired with the auxiliary device via Bluetooth). For example, generating the continuing content can be performed locally. In some implementations where generating the continuing content is performed locally, the resource(s) on which search(es) are performed in generating the continuing content can be proactively downloaded at the auxiliary device or the client device in advance of needing to be utilized. In some versions of those implementations, they can be proactively downloaded based on a current environmental context (e.g., resources relevant to a current location) or a current conversational context (e.g., resources relevant to topic(s) inferred from prior utterance(s) of the conversation). Proactively downloading of such resources and/or local generation of the continuing content can further reduce latency in rendering of the continuing content.

The above description is provided as an overview of some implementations of the present disclosure. Further description of those implementations, and other implementations, are described in more detail below.

Other implementations can include a non-transitory computer readable storage medium storing instructions executable by one or more processors *(e.g*., central processing unit(s) (CPU(s)), graphics processing unit(s) (GPU(s)), and/or tensor processing unit(s) (TPU(s)) to perform a method such as one or more of the methods described above and/or elsewhere herein. Yet other implementations can include a system of one or more computers that include one or more processors operable to execute stored instructions to perform a method such as one or more of the methods described above and/or elsewhere herein.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

FIG. 1A and FIG. 1B illustrate views of a suggestion module that allows a user to receive, in certain contexts, suggested information in a punctual manner without express solicitation from the user.
FIG. 2A and FIG. 2B illustrate views of a user that is wearing a pair of earbuds and is assisted by a suggestion module, which can punctually provide suggestions to the user without the user necessarily expressly requesting the suggestions.
FIG. 3 illustrates a system that allows an auxiliary computing device to punctually render content for a user when the user is predicted to desire personal assistance and/or assistance with helping another person.
FIG. 4 illustrates a method for punctually providing supplemental information via a wearable device in certain contexts in which the user may or may not be expressly soliciting such information from their wearable device.
FIG. 5 is a block diagram of an example computer system.

### Detailed Description

Implementations set forth herein relate to providing a suggestion module for punctually rendering data via an interface of a wearable device and/or other computing device without the suggestion module necessarily being directly invoked by a user. The suggestion module can operate at one or more different devices including, but not limited to, a pair of earbuds, eyeglasses, a watch, cellular phone, and/or any other computerized device. In some implementations, the suggestion module can operate at a primary computing device *(e.g.,* a cellular phone) and interface with an auxiliary computing device (e.g., earbuds and/or eyeglasses). The suggestion module can operate to provide a user with suggestion content in certain contexts and, optionally, without being initially invoked by the user. In this way, a user can receive certain helpful information via their wearable devices through a process that involves less interaction with their devices and/or mitigates interruptions that might otherwise occur when a user attempts to identify helpful content.

As an example, a user that is checking into a flight can be asked, by a flight agent, about details regarding their flight. For instance, the flight agent may ask the user, "What is your flight number?" When the user acknowledges the question from the flight agent, the user may be wearing earbuds and/or eyeglasses that are computerized or otherwise in communication with a computing device. A suggestion module can operate at the wearable device, and/or other computerized device assisting the wearable device, thereby allowing the content of the question from the flight agent (with prior permission from the user) to be processed by the suggestion module. For instance, audio data corresponding to the spoken utterance from the flight agent can be processed to determine that the flight agent is requesting that the user provide a specific instance of data *(e.g.,* a string of characters corresponding to their flight number). When the suggestion module determines that this instance of data is being requested, the suggestion module can identify data that may satisfy the question from the flight agent.

In some implementations, and with prior permission from the user, the suggestion module can access one or more different sources of data to determine a suitable and/or accurate answer to the question from the flight agent. For example, the suggestion module can access (with prior permission from the user) location data, application data, and/or other data in order to identify a corpus of data that may be useful in the current context. For instance, the location data can indicate that the user is at an airport, and travel data stored in a memory of the cellular device of the user can be associated with the airport. The travel data can be processed by the suggestion module when the user arrives at the airport, thereby allowing the suggestion module to buffer certain outputs that may be useful to the user while they are at the airport. In some implementations, the suggestion module can buffer audio data that can be responsive to inquiries the user may encounter when at the airport-even if the suggestion module does not eventually render the audio data. Alternatively, or additionally, the suggestion module and/or other application can process data indicating whether the user may be in a circumstance in which the audio data should, or should not, be rendered for the benefit of the user.

For example, the spoken utterance provided by the airport agent can be processed by a computing device that provides access to the suggestion module. When the suggestion module determines that the data available to the suggestion module *(e.g.,* the travel data and/or buffered audio data) is suitable for responding to the spoken utterance from the airport agent, the suggestion module and/or other application can determine whether there are any indications that the suggestion module should, or should not, cause the audio data to be rendered. For example, a heuristic process and/or machine learning model can be utilized to determine whether the suggestion module should, or should not, render the buffered audio data. This determination can be based on a variety of different data such as, but not limited to, an amount of time since the user last spoke, a noise or disfluency made by the user *(e.g.,,* "Hmmm..."), a gesture performed by the user *(e.g.,* the user looks up, nods, etc.), am inertial measurement, an amount of time since the flight agent last spoke, a rate at which the user speaks, a rate at which the flight agent speaks, an express input directly soliciting a suggestion from the suggestion module, another express input directed to suppressing the suggestion from the suggestion module, and/or any other detectable feature of a context in which the flight agent directs the spoken utterance to the user.

In some instances, the user may respond to the flight agent by providing another spoken utterance such as, "Let me check...," followed by a brief pause *(e.g.,* at least a half of a second). This brief pause can be characterized by data *(e.g.,* input data from a microphone) and processed according to one or more heuristic processes and/or trained machine learning models for determining whether or not to render the suggestion for the user. For example, when the brief pause exhibited by the user lasts for a threshold amount of time and/or the user emits a particular verbal gesture *(e.g.,* a brief humming sound), the suggestion module can cause the audio data to be rendered for the user. For instance, after the airport agent provides the spoken utterance, "What is your flight number?" and the user provides the other spoken utterance "Let me check..." followed by the brief pause, the suggestion module can render an audible output such as, "K2134." The audible output can be rendered via a pair of earbuds being worn by the user during the interaction with the airport agent, thereby allowing the user to receive the "flight number" from the suggestion module without having to initialize a display interface of the cellular phone. This can preserve the time of the user as they respond to important inquiries from third parties, and can also help to conserve computational resources of any devices the user may typically rely on in such circumstances.

In some implementations, further training of one or more models utilized by the suggestion module can be performed based on whether or not the user is determined to have been assisted by a suggestion or not, and/or whether the user is determined to have desired the suggestion. For example, when the user recites the suggestion to the airport agent *(e.g.,* "K-2-1-3-4..."), one or more models can be updated based on the user having utilized the suggestion from the suggestion model. Alternatively, or additional, a score or other rank for one or more sources of data that formed the basis for the suggestion can be modified according to the user having utilized the suggestion from the suggestion model. A determination of whether the user utilized the suggestion can be based on ASR and determining whether there is a match or correlation between the suggestion and the spoken utterance from the user. In some instances, when the user does not utilize the suggestion from the suggestion module, a score or other rank for the one or more sources of the data that formed the basis for the suggestion can be modified accordingly. In this way, sources of data that are not determined to be helpful to the user can be relied upon less as the suggestion module continues to operate to provide subsequent suggestions.

In some implementations, one or more models and/or processes utilized to determine whether to render a suggestion in certain circumstances can also be updated to reflect how the user has historically utilized suggestions from the suggestion module. For instance, a user may respond positively to suggestions being rendered in public spaces when close acquaintances are present compared to other suggestions being rendered in a private space *(e.g.,* at home or at work). As a result, the suggestion module can adapt to less frequently render suggestions in private spaces and more frequently render suggestions in public spaces. In some implementations, properties of how a suggestion is rendered can be adapted over time according to how a user responds to suggestions from the suggestion module and/or how the user otherwise interacts directly and/or indirectly with their device(s). For instance, a rate at which a user speaks, and/or an accent of the user, can be detected by a device that facilitates functionality of the suggestion module and utilized, with prior permission from the user, to render suggestions at a similar rate and/or with a similar accent.

For example, a user that speaks at a fast rate may also be rendered suggestions at a comparable rate *(e.g.,* the same rate plus or minus a threshold tolerance value). In some implementations, properties of rendered suggestions can be dynamically adapted according to a context of the user and/or content of a suggestion. As an example, the suggestion module can determine that the user speaks at a different rate than a third party to which a suggestion may be directed. Based on this determination, the suggestion module can cause a suggestion to be rendered at a rate that is suitable for the third party *(e.g.,* the airport agent), which can be interpreted as a suggestion for how the user should recite the suggested content back to the third party. For instance, even though the user may speak at a higher rate than the third party, the user may recite the suggestion at a lower rate because the suggestion module caused the suggestion to be rendered at the lower rate.

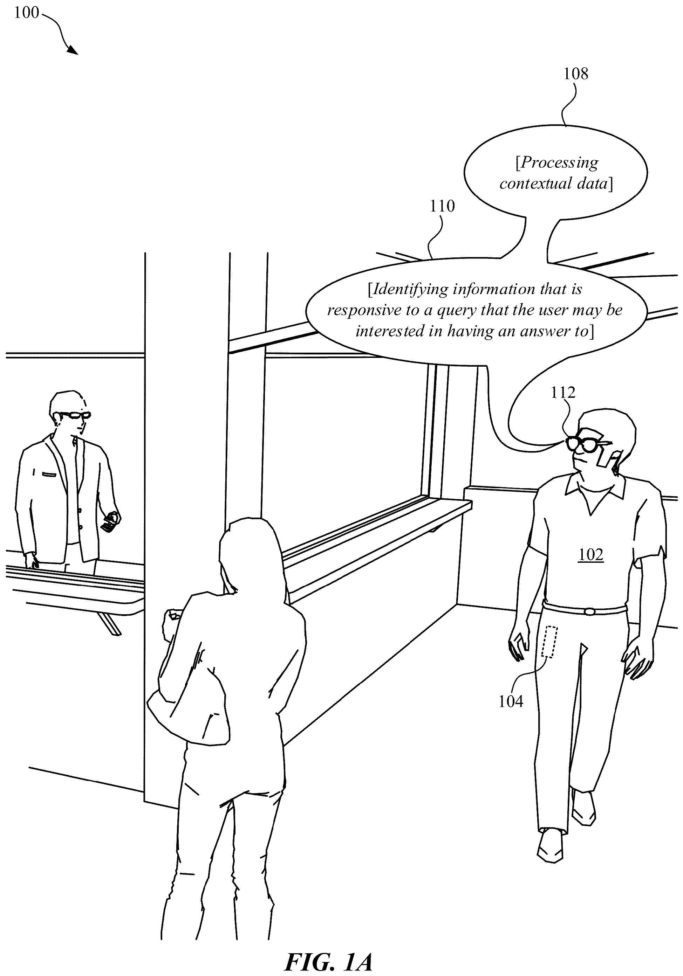

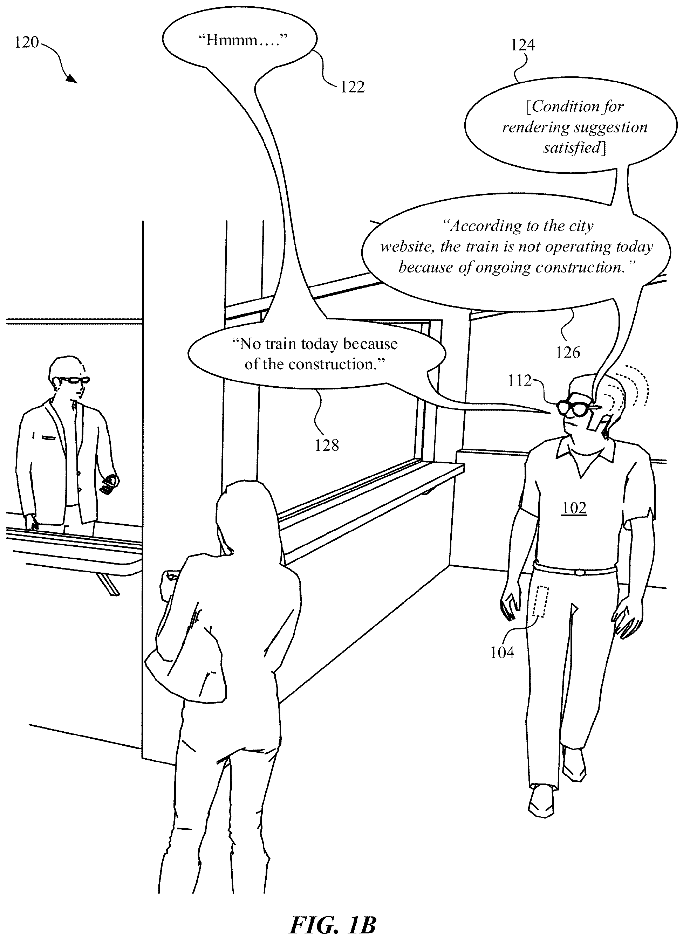

FIG. 1A and FIG. 1B illustrate a view 100 and a view 120 of a suggestion module of a computing device 104 and/or computing device 112 that allows a user 102 to receive, in certain contexts, suggested information in a punctual manner without direct, express solicitation from the user 102. In some implementations, a direct express solicitation from a user to an application can include the user: identifying the application, speaking one or more pre-defined invocation terms to invoke the application (e.g., "Hey Assistant..."), tapping a touch input for invoking the application (e.g., tapping a "home" button of a cell phone), or performing other direct express solicitations. In some implementations, the computing device 104 can be a primary device and the computing device 112 can be an auxiliary computing device that is in communication with the computing device 104. The computing device 112 can, with prior permission from a user 102, process contextual data associated with a context in which the user 102 may currently and/or previously been. For example, the computing device 112 can include one or more interfaces for capturing data that characterizes a context of the user 102. In some implementations, the computing device 112 can be a pair of computerized eyeglasses that include a display interface, camera, speaker, and/or microphone. The microphone and/or camera can capture, in certain pre-approved circumstances, audio data and/or image data that is based on the surroundings of the user 102.

For instance, the microphone can capture audio data that characterizes audio of a nearby person publicly speaking a query to the user 102 and/or one or more other persons. The query can be, for example, "Do you all know if the train is running today?" which can be a solicitation for the user 102 to provide an answer to the query. Audio data characterizing the query can undergo processing 108 at the computing device 112 and/or computing device 104 to identify information that is responsive to the query. For example, the audio data can undergo speech processing to identify natural language content of the query and select one or more sources of information for selecting a subset of responsive data. When the responsive information has been identified at an operation 110, a suggestion module of the computing device 112 and/or the computing device 104 can determine whether one or more features of the context satisfy one or more conditions for rendering suggestion information to the user 102.

For example, the computing device 112 can determine that the user 102 has performed a gesture 122 that can satisfy the one or more conditions for rendering the suggestion information. In some implementations, a detected gesture can be an audible sound that may, or may not, correspond to a word or phrase that suggests the user 102 is willing to receive the suggestion information. Alternatively, or additionally, the detected gesture 122 can be a physical motion of the user 102 *(e.g.,* a non-verbal gesture) that is determined to suggest that the user 102 is willing to receive the suggestion information. For example, the user 102 can make a sound such as "Hmmm..." indicating that the user 102 is considering responding to the query from the other person. This sound or disfluency can indicate to the suggestion module that the user 102 is trying to think of a suitable response for the other person.

The suggestion module can make a determination 124 that one or more conditions for providing the suggestion information have been satisfied and, in response, render an output 126 that embodies the suggestion information. For instance, the computing device 112 can render an audible output into an ear of the user 102, and the audible output may only be audible to the user 102 because they are wearing the computing device 112. The audible output can be, for example, "According to the city website, the train is not operating today because of ongoing construction." When the user 102 has received this suggested information, the user can then provide a response 128 to the other person such as, "No train today because of the construction." In some implementations, the suggestion module can determine whether the user 102 utilized the suggested information and can modify one or more suggestion processes accordingly. For example, one or more trained machine learning models can be trained based on the user 102 having utilized the suggested information in the context of FIG. 1A and FIG. 1B. Thereafter, when the user 102 is in a similar context, the suggestion module can generate suggestion information based on previous instances in which the user 102 utilized suggested information in the similar context.

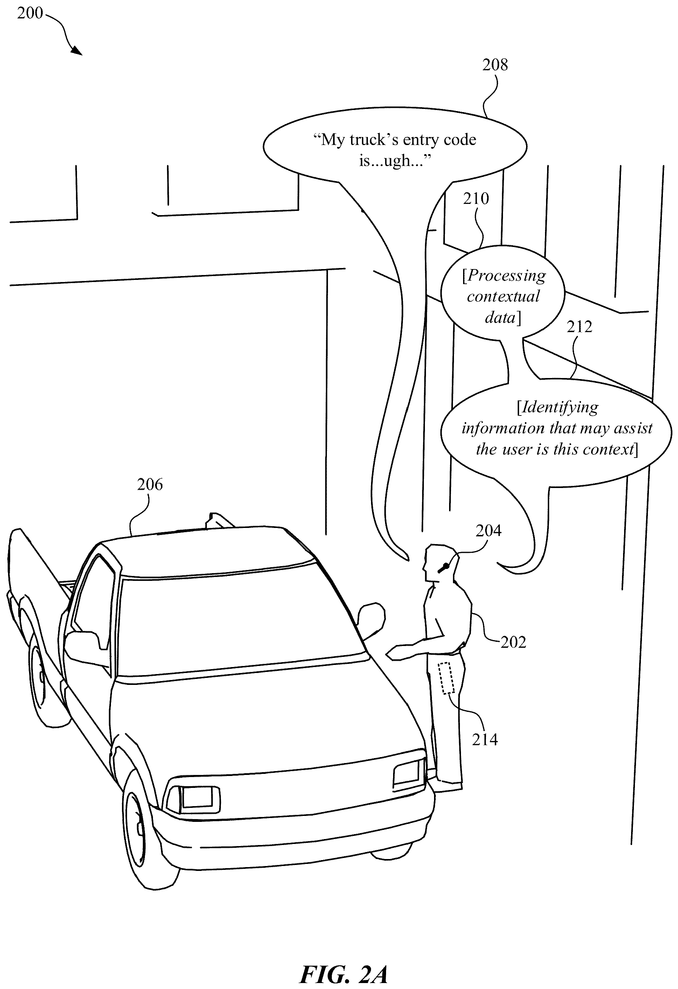

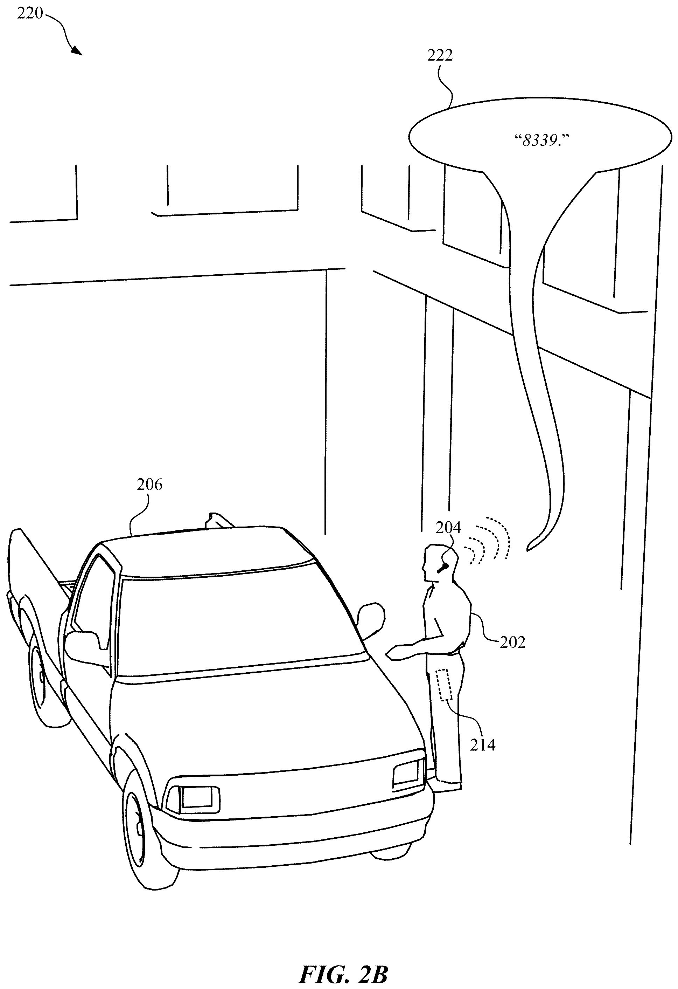

FIG. 2A and FIG. 2B illustrate a view 200 and a view 220 of a user 202 that is wearing a pair of earbuds and is assisted by a suggestion module, which can punctually provide suggestions to the user 202 without the user necessarily expressly requesting the suggestions. For example, the user 202 can be at a geographic location corresponding to a rental car facility. Prior to arriving at the rental car facility, the user 202 may have corresponded with a rental car application to reserve a vehicle 206 that has a particular keycode for entering the vehicle 206. In some implementations, a computing device 214 and/or auxiliary computing device 204 can store and/or provide access to information associated with a reservation made by the user 202. A suggestion module of the computing device can, with prior permission from the user 202, process the reservation and/or other contextual data in order to assist the user 202 when they are at the rental car facility.

For example, the user 202 can perform a verbal gesture 208 or otherwise emit a sound *(e.g.,* a disfluency) that indicates they may be trying to remember something. The verbal gesture 208 can be, "My truck's entry code is...ugh..." and can be detected by the auxiliary computing device 204 via a microphone of the auxiliary computing device 204. Alternatively, or additionally, contextual data, which can include audio data, can be captured by the auxiliary computing device 204 and the primary computing device 214 to identify features of a context of the user 202. The contextual data can undergo a process 210 to determine that the user 202 is at the location of the rental facility and that the user 202 is exhibiting a pause or other moment of reflection. Based on this determination, the suggestion module can perform an operation 212 of identifying information that may assist the user 202 in the current context.

For example, the suggestion module can access, with prior permission from the user 202, reservation data that is associated with the location of the user 202. Alternatively, or additionally, the suggestion module can identify one or more types of data that one or more other users may have accessed when at the location of the user 202 and/or a similar location. For example, the contextual data can be processed using one or more trained machine learning models that have been trained according to historical interaction data. The historical interaction data can characterize one or more prior interactions between the user (and/or one or more other users) and one or more computing devices. These prior interactions can include prior instances when the user 202 and/or one or more other users accessed reservation data and/or keycode data when at a rental car facility. Therefore, when the contextual data is processed using the one or more trained machine learning models, a determination can be made that the user 202 will likely benefit from having the keycode data rendered to them.

When the suggestion module determines that the keycode data is suitable for suggesting to the user 202, the suggestion module can cause the auxiliary computing device 204 *(e.g.,* earbuds, smart watch, and/or other wearable device) to audibly render a keycode as following content (e.g., "8339," or "The code for your truck is 8339"). Alternatively, or additionally, the suggestion module can determine whether one or more conditions have been satisfied before causing the auxiliary computing device 204 to render a suggestion output 222. For example, the computing device 214 and/or the auxiliary computing device 204 can determine whether one or more features of the context of the user 202 satisfy one or more conditions for rendering the suggested information. In some implementations, the one or more conditions can include a duration of time since the user 202 provided a disfluency (e.g., "Ugh..."), without providing another spoken utterance. When the duration of time since the disfluency satisfies a threshold duration of time, the suggestion module can cause the auxiliary computing device 204 to render the suggestion output 222.

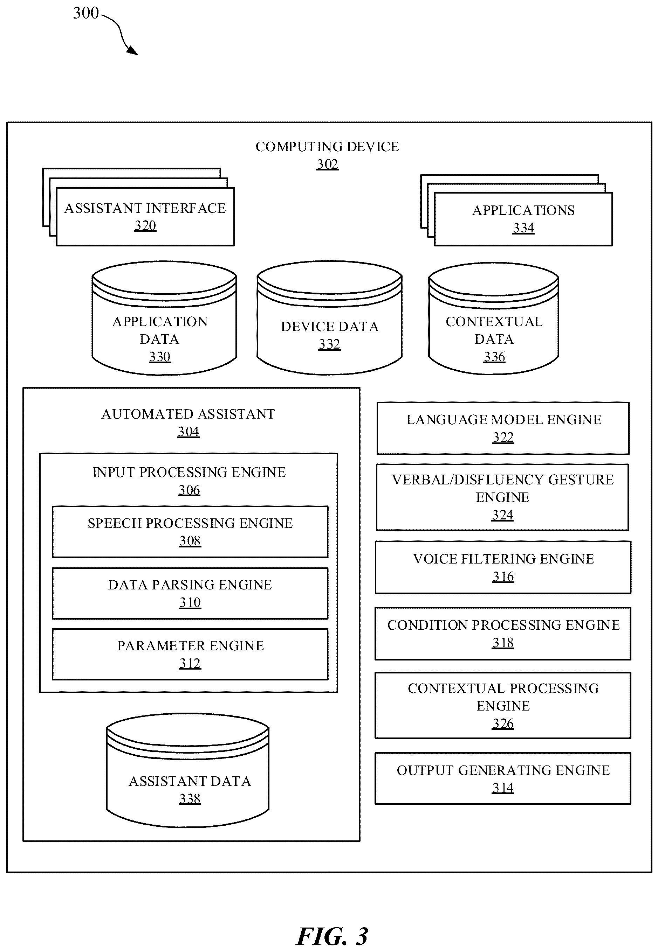

FIG. 3 illustrates a system 300 that allows an auxiliary computing device to punctually render content for a user when the user is predicted to desire personal assistance and/or assistance with helping another person. The automated assistant 304 can operate as part of an assistant application that is provided at one or more computing devices, such as a computing device 302 and/or a server device. A user can interact with the automated assistant 304 via assistant interface(s) 320, which can be a microphone, a camera, a touch screen display, a user interface, and/or any other apparatus capable of providing an interface between a user and an application. For instance, a user can initialize the automated assistant 304 by providing a verbal, textual, and/or a graphical input to an assistant interface 320 to cause the automated assistant 304 to initialize one or more actions (e.g., provide data, control a peripheral device, access an agent, generate an input and/or an output, etc.). Alternatively, the automated assistant 304 can be initialized based on processing of contextual data 336 using one or more trained machine learning models. The contextual data 336 can characterize one or more features of an environment in which the automated assistant 304 is accessible, and/or one or more features of a user that is predicted to be intending to interact with the automated assistant 304. The computing device 302 can include a display device, which can be a display panel that includes a touch interface for receiving touch inputs and/or gestures for allowing a user to control applications 334 of the computing device 302 via the touch interface. In some implementations, the computing device 302 can lack a display device, thereby providing an audible user interface output, without providing a graphical user interface output. Furthermore, the computing device 302 can provide a user interface, such as a microphone, for receiving spoken natural language inputs from a user. In some implementations, the computing device 302 can include a touch interface and can be void of a camera, but can optionally include one or more other sensors.

The computing device 302 and/or other third party client devices can be in communication with a server device over a network, such as the internet. Additionally, the computing device 302 and any other computing devices can be in communication with each other over a local area network (LAN), such as a Wi-Fi network. The computing device 302 can offload computational tasks to the server device in order to conserve computational resources at the computing device 302. For instance, the server device can host the automated assistant 304, and/or computing device 302 can transmit inputs received at one or more assistant interfaces 320 to the server device. However, in some implementations, the automated assistant 304 can be hosted at the computing device 302, and various processes that can be associated with automated assistant operations can be performed at the computing device 302.

In various implementations, all or less than all aspects of the automated assistant 304 can be implemented on the computing device 302. In some of those implementations, aspects of the automated assistant 304 are implemented via the computing device 302 and can interface with a server device, which can implement other aspects of the automated assistant 304. The server device can optionally serve a plurality of users and their associated assistant applications via multiple threads. In implementations where all or less than all aspects of the automated assistant 304 are implemented via computing device 302, the automated assistant 304 can be an application that is separate from an operating system of the computing device 302 (e.g., installed "on top" of the operating system) - or can alternatively be implemented directly by the operating system of the computing device 302 (e.g., considered an application of, but integral with, the operating system).

In some implementations, the automated assistant 304 can include an input processing engine 306, which can employ multiple different modules for processing inputs and/or outputs for the computing device 302 and/or a server device. For instance, the input processing engine 306 can include a speech processing engine 308, which can process audio data received at an assistant interface 320 to identify the text embodied in the audio data. The audio data can be transmitted from, for example, the computing device 302 to the server device in order to preserve computational resources at the computing device 302. Additionally, or alternatively, the audio data can be exclusively processed at the computing device 302.

The process for converting the audio data to text can include a speech recognition algorithm, which can employ neural networks, and/or statistical models for identifying groups of audio data corresponding to words or phrases. The text converted from the audio data can be parsed by a data parsing engine 310 and made available to the automated assistant 304 as textual data that can be used to generate and/or identify command phrase(s), intent(s), action(s), slot value(s), and/or any other content specified by the user. In some implementations, output data provided by the data parsing engine 310 can be provided to a parameter engine 312 to determine whether the user provided an input that corresponds to a particular intent, action, and/or routine capable of being performed by the automated assistant 304 and/or an application or agent that is capable of being accessed via the automated assistant 304. For example, assistant data 338 can be stored at the server device and/or the computing device 302, and can include data that defines one or more actions capable of being performed by the automated assistant 304, as well as parameters necessary to perform the actions. The parameter engine 312 can generate one or more parameters for an intent, action, and/or slot value, and provide the one or more parameters to an output generating engine 314. The output generating engine 314 can use the one or more parameters to communicate with an assistant interface 320 for providing an output to a user, and/or communicate with one or more applications 334 for providing an output to one or more applications 334.

In some implementations, the automated assistant 304 can be an application that can be installed "on-top of" an operating system of the computing device 302 and/or can itself form part of (or the entirety of) the operating system of the computing device 302. The automated assistant application includes, and/or has access to, on-device speech recognition, on-device natural language understanding, and on-device fulfillment. For example, on-device speech recognition can be performed using an on-device speech recognition module that processes audio data (detected by the microphone(s)) using an end-to-end speech recognition machine learning model stored locally at the computing device 302. The on-device speech recognition generates recognized text for a spoken utterance (if any) present in the audio data. Also, for example, on-device natural language understanding (NLU) can be performed using an on-device NLU module that processes recognized text, generated using the on-device speech recognition, and optionally contextual data, to generate NLU data.

NLU data can include intent(s) that correspond to the spoken utterance and optionally parameter(s) (e.g., slot values) for the intent(s). On-device fulfillment can be performed using an on-device fulfillment module that utilizes the NLU data (from the on-device NLU), and optionally other local data, to determine action(s) to take to resolve the intent(s) of the spoken utterance (and optionally the parameter(s) for the intent). This can include determining local and/or remote responses (e.g., answers) to the spoken utterance, interaction(s) with locally installed application(s) to perform based on the spoken utterance, command(s) to transmit to internet-of-things (IoT) device(s) (directly or via corresponding remote system(s)) based on the spoken utterance, and/or other resolution action(s) to perform based on the spoken utterance. The on-device fulfillment can then initiate local and/or remote performance/execution of the determined action(s) to resolve the spoken utterance.

In various implementations, remote speech processing, remote NLU, and/or remote fulfillment can at least selectively be utilized. For example, recognized text can at least selectively be transmitted to remote automated assistant component(s) for remote NLU and/or remote fulfillment. For instance, the recognized text can optionally be transmitted for remote performance in parallel with on-device performance, or responsive to failure of on-device NLU and/or on-device fulfillment. However, on-device speech processing, on-device NLU, on-device fulfillment, and/or on-device execution can be prioritized at least due to the latency reductions they provide when resolving a spoken utterance (due to no client-server roundtrip(s) being needed to resolve the spoken utterance). Further, on-device functionality can be the only functionality that is available in situations with no or limited network connectivity.

In some implementations, the computing device 302 can include one or more applications 334 which can be provided by a third-party entity that is different from an entity that provided the computing device 302 and/or the automated assistant 304. An application state engine of the automated assistant 304 and/or the computing device 302 can access application data 330 to determine one or more actions capable of being performed by one or more applications 334, as well as a state of each application of the one or more applications 334 and/or a state of a respective device that is associated with the computing device 302. A device state engine of the automated assistant 304 and/or the computing device 302 can access device data 332 to determine one or more actions capable of being performed by the computing device 302 and/or one or more devices that are associated with the computing device 302. Furthermore, the application data 330 and/or any other data (e.g., device data 332) can be accessed by the automated assistant 304 to generate contextual data 336, which can characterize a context in which a particular application 334 and/or device is executing, and/or a context in which a particular user is accessing the computing device 302, accessing an application 334, and/or any other device or module.

While one or more applications 334 are executing at the computing device 302, the device data 332 can characterize a current operating state of each application 334 executing at the computing device 302. Furthermore, the application data 330 can characterize one or more features of an executing application 334, such as content of one or more graphical user interfaces being rendered at the direction of one or more applications 334. Alternatively, or additionally, the application data 330 can characterize an action schema, which can be updated by a respective application and/or by the automated assistant 304, based on a current operating status of the respective application. Alternatively, or additionally, one or more action schemas for one or more applications 334 can remain static, but can be accessed by the application state engine in order to determine a suitable action to initialize via the automated assistant 304.

The computing device 302 can further include an assistant invocation engine that can use one or more trained machine learning models to process application data 330, device data 332, contextual data 336, and/or any other data that is accessible to the computing device 302. The assistant invocation engine can process this data in order to determine whether or not to wait for a user to explicitly speak an invocation phrase to invoke the automated assistant 304, or consider the data to be indicative of an intent by the user to invoke the automated assistant-in lieu of requiring the user to explicitly speak the invocation phrase. For example, the one or more trained machine learning models can be trained using instances of training data that are based on scenarios in which the user is in an environment where multiple devices and/or applications are exhibiting various operating states. The instances of training data can be generated in order to capture training data that characterizes contexts in which the user invokes the automated assistant and other contexts in which the user does not invoke the automated assistant. When the one or more trained machine learning models are trained according to these instances of training data, the assistant invocation engine can cause the automated assistant 304 to detect, or limit detecting, spoken invocation phrases from a user based on features of a context and/or an environment.

In some implementations, the computing device 302 can be a wearable device, such as a pair of earbuds, a watch, and/or a pair of eyeglasses, and/or any other wearable computing device. The computing device 302 can include a language model engine 322 that facilitates access to a transformer neural network model, recurrent neural network, and/or other language model (LM). For example, the computing device 302 can capture audible sounds via one or more interfaces and process audio data corresponding to the audible sounds using the language model engine 322. In some implementations, the language model engine 322 can employ a transformer neural network model to determine whether a spoken utterance is complete or incomplete, and/or whether a type of entity that can be utilized to complete a spoken utterance. For instance, when a user of the computing device 302, and/or another person, recites a spoken utterance such as, "At 7:30PM I have to be at..." the language model engine 322 can be utilized to determine that an "event" entity type can be utilized to complete this incomplete spoken utterance. Thereafter, the spoken utterance can be processed to identify suitable content corresponding to the entity type *(e.g.,* a location such as "Cardinal Stadium") for completing the spoken utterance. In some implementations, the content can be identified using a public knowledge graph that is generated based on prior interactions between one or more other persons and one or more other applications. Alternatively, or additionally, the content can be identified using a private knowledge graph that is generated based on prior interactions between the user and one or more applications.

In some implementations, the computing device 302 can include a verbal/disfluency gesture engine 324. The verbal/disfluency gesture engine 324 can be utilized to process input data from one or more sensors for determining whether a user has indicated a willingness to receive suggested information and/or content. For example, a disfluency embodied in audio data (e.g., "Hmm...") can be identified by the verbal/disfluency gesture engine 324 and utilized as a factor for determining whether to punctually provide suggested information at a given time. Other factors can include a context of the user and/or prior interactions in which the user subsequently utilized information that may not have been expressly solicited by the user. Alternatively, or additionally, the verbal/disfluency gesture engine 324 can process inputs from other sensors, such as a motion sensor, that can characterize a motion of the user and/or one or more extremities of the user. Certain motions that can influence an accelerometer or inertial sensor can be detected and considered as factors when determining whether a user would benefit from unsolicited information. For example, a user that is maneuvering through a line at the airport may exhibit a sharp pause in motion when rifling through their bag to search for their identification. In response, the computing device 302 can determine that the user is searching for a particular type of information and cause an output interface to punctually render the information to the user (e.g., via a set of earbuds being worn by the user). In some implementations, the verbal/disfluency gesture engine 324 can process data from multiple sources to determine characteristics of verbal gestures and/or non-verbal gestures. For instance, a cadence of speech and/or rate of speaking can be detected by the verbal/disfluency gesture engine 324 for determining whether the user would benefit from an unsolicited rendering of suggested information. In this way, when a user who typically talks fast is currently speaking slowly (e.g., speaking slowly as a result of a lack of recollection), the computing device 302 can determine that this user may need assistance recalling certain information. Alternatively, or additionally, when a user who typically talks with a lower pitch is currently speaking at a higher pitch, the computing device 302 can determine that this user may need assistance recalling certain information.

In some implementations, the computing device 302 can include a voice filtering engine 316, which can be utilized when processing audio data. The voice filtering engine 316 can be used to remove speech from one or more persons from a portion of audio data, in order to isolate particular speech from a particular person. For instance, a person who recites a question in a crowded room can cause the voice filtering engine 316 to filter out sound from the crowd in response to detecting the voice of the person, thereby allowing the question from the person to be accurately processed. The language model engine 322 can then process the question in order to generate suggested information that a user can recite to answer the person's question-at least if the user expresses a willingness to receive such information. In some implementations, the computing device 302 can include a condition processing engine 318 for determining whether one or more conditions for rendering suggested information to a user have been satisfied. In some implementations, the one or more conditions can vary for certain context and/or certain users, and/or can be determined using a heuristic process and/or one or more trained machine learning models. For instance, a user that declines to receive unsolicited suggested information at a particular location can cause the condition processing engine 318 to generate a location-based condition for rendering suggested information. In some implementations, an output of the verbal/disfluency gesture engine 324 can be processed to determine whether one or more conditions have been satisfied before rending suggested information to the user.

In some implementations, the computing device 302 can include a context processing engine 326 that can process contextual data 336 for identifying suitable content to render to the user and/or determining whether the user is willing to receive the content without express solicitation. For example, a location of the user can be an indication of whether the user would be willing to receive proactive information via their wearable device. For instance, a user may prefer to receive unsolicited information outside of a radius from their home. Therefore, determining a geographic location of the user, with prior permission from the user, can assist with determining whether to render certain unsolicited information to the user. In some implementations, the computing device 302 can include an output generating engine 314 that can determine characteristics of an output to be rendered. For example, the output generating engine 314 can cause suggested information to be rendered via an audio output interface at a rate that is based on a rate at which the user speaks. In some implementations, rendering of suggested information can be momentarily paused and/or permanently stopped based on a change in context of the user and/or how a user responds to the rendering of the suggested information. For example, when a user recites the suggested information out loud via their speech, rendering of suggested information can be temporarily paused until the user has completely recited a portion of the suggested information that has been rendered thus far. Alternatively, or additionally, when the user performs a verbal gesture and/or a non-verbal gesture that indicates the user is not interested in suggested information being rendered, the output generating engine 314 can stop rendering the suggested information.

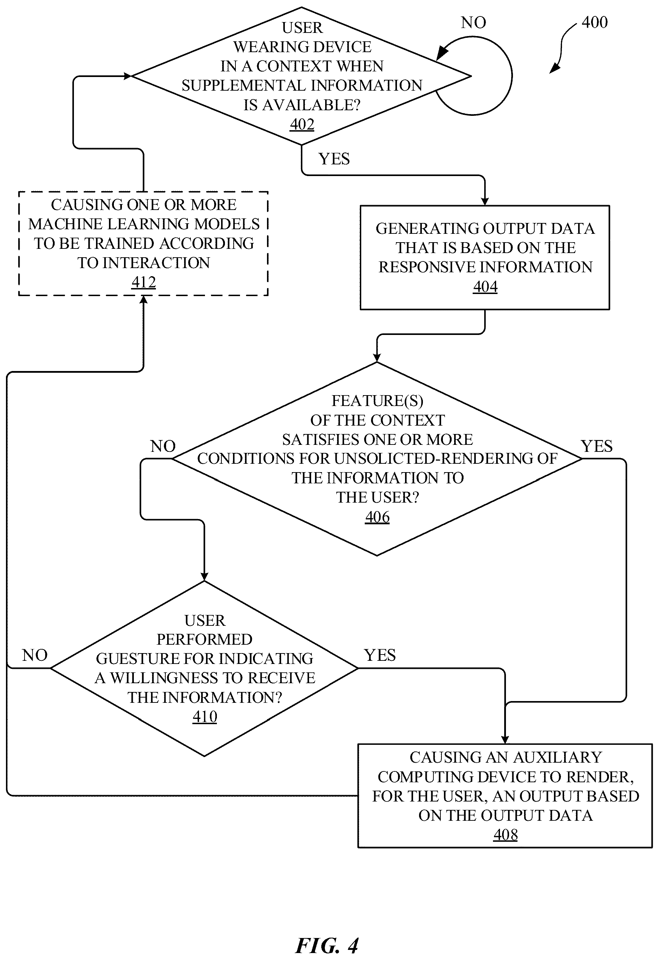

FIG. 4 illustrates a method 400 for punctually providing supplemental information via a wearable device in certain contexts in which the user may or may not be expressly soliciting such information from their wearable device. The method 400 can be performed by one or more computing devices, applications, and/or any other apparatus or module that can be associated with an automated assistant. The method 400 can include an operation 402 of determining whether the user is wearing a device in a context in which supplemental information is available. The supplemental information can be associated with the context of the user and/or can be retrieved via a primary computing device that is in communication with the device *(i.e.,* an auxiliary computing device) being worn by the user. For example, the user may be visiting a storage facility that they rent, and the storage facility may have a keypad for inserting a passcode that can provide access to a stall in the storage facility. The user can be wearing a computerized pair of earbuds and/or eyeglasses, and/or a smart watch when the user is approaching the keypad. In this context, the primary computing device can determine, based on data available to the primary computing device, that the user is wearing a computerized device while in a context when supplemental information (e.g., a passcode) is available. The passcode can be available in a memory of the primary computing device, the auxiliary computing device, and/or other computing device that is available over a network connection.

When the user is determined to be wearing a computerized device while in this context, the method 400 can proceed from the operation 402 to an operation 404 of generating output data that is based on the responsive information. For example, the responsive information can be based on one or more different sources of data, such as one or more applications and/or devices that are accessible via the primary computing device and/or auxiliary computing device. In some implementations, one or more sources of data can be selected for providing information based on how each source of data is ranked relative to the context of the user. For example, a particular application can be prioritized over other applications as a source of information based on a location of the user, content of audio captured by an auxiliary computing device, content of images captured by an auxiliary computing device, and/or any other data that can be available to a computing device. For instance, a security application associated with the keypad can be prioritized over other applications, and therefore the security application can be selected as the source of information in the context in which the user is approaching the keypad.

The method 400 can proceed from the operation 404 to an operation 406 of determining whether one or more features of the context satisfy one or more conditions for unsolicited rendering of the information to the user. The one or more conditions for rendering the information can be selected for a particular user, a particular context, and/or a particular input to an auxiliary computing device and/or primary computing device. For example, when the user exhibits a type of pause in their speaking and/or motion, the one or more conditions can be determined to be satisfied. In some implementations, the one or more conditions can be satisfied for a pause in motion (e.g., a pause that creates a detectable amount of inertia) and/or speech that lasts a threshold duration of time, and/or that is accompanied by other input data *(e.g.,* ambient noise, a voice of another person, a detected distance from an object and/or location, etc.). These contextual features can be considered different from an intentional gesture, such as a spoken input and/or a hand motion of the user, but can nonetheless cause the method 400 to perform the operation 408.

In some implementations, the one or more conditions for rendering the information can be established over time as a result of training one or more machine learning models. For example, a user can provide an affirmation, after certain information is rendered, indicating whether the certain information was useful to the user and/or provided in a punctual manner. The affirmation can be, for instance, a gesture that is interpreted by the primary computing device and/or auxiliary computing device as an indication that the provisioning of information was useful to the user. In some implementations, the gesture can include a recitation of at least part of the information provided by via the auxiliary computing device and/or a physical motion of the user *(e.g.,* a head nod) in response to receiving the information via the auxiliary computing device. Such user feedback can then be utilized to further train one or more machine learning models for providing information via the auxiliary computing devices in a punctual manner.

When the feature(s) of the context satisfies the one or more conditions for unsolicited rendering of the information to the user, the method 400 can proceed from the operation 406 to an operation 408. Otherwise, the method 400 can proceed from the operation 406 to an operation 410. The operation 408 can include causing the auxiliary computing device to render, for the user, an output based on the output data. For instance, the auxiliary computing device can include one or more interfaces for rendering content and the output can be rendered via the one or more interfaces. When the auxiliary computing device is a pair of earbuds, the output can be audible content (e.g., a passcode for the keypad) that is rendered via one or more speakers of the pair earbuds. Alternatively, or additionally, when the user is wearing a pair of computerized eyeglasses, the output can be visually rendered and/or audibly rendered via one or more interfaces of the eyeglasses.

When the feature(s) of the context does not satisfy the one or more conditions, the method 400 can proceed to the operation 410 that can include determining whether the user performed an intentional gesture for indicating a willingness to receive the information. For example, the intentional gesture can be any intentional and direct input from the user to the auxiliary computing device and/or primary computing device. In accordance with the aforementioned example, when the user is ready for the auxiliary computing device to render the output, the user can perform a gesture such as saying the phrase "What's this?" and/or pointing to the keypad such that a camera of the auxiliary computing device will capture the gesture. When the user is determined to have provided the intentional gesture, the method 400 can proceed to the operation 408. Otherwise, the method 400 can return to the operation 402.

In some implementations, the method 400 can include an optional operation 412 of causing one or more machine learning models to be trained according to the interaction between the user and the primary computing device and/or auxiliary computing device. For example, a suggestion module of the primary computing device and/or auxiliary computing device can provide information to the user in a particular context without being directly solicited. When the user responds affirmatively or positively to the provisioning of information, the one or more models can be trained to prioritize a particular type of information in that context. However, when the user does not respond affirmatively or positively to the provisioning of information, the one or more models can be trained to not provide the particular type of information in that context.

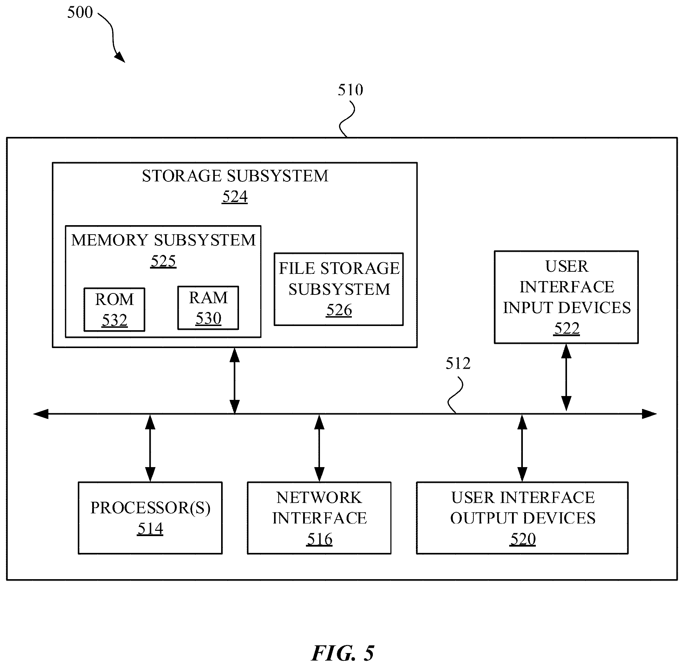

FIG. 5 is a block diagram 500 of an example computer system 510. Computer system 510 typically includes at least one processor 514 which communicates with a number of peripheral devices via bus subsystem 512. These peripheral devices may include a storage subsystem 524, including, for example, a memory 525 and a file storage subsystem 526, user interface output devices 520, user interface input devices 522, and a network interface subsystem 516. The input and output devices allow user interaction with computer system 510. Network interface subsystem 516 provides an interface to outside networks and is coupled to corresponding interface devices in other computer systems.

User interface input devices 522 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 510 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 510 to the user or to another machine or computer system.

Storage subsystem 524 stores programming and data constructs that provide the functionality of some or all of the modules described herein. For example, the storage subsystem 524 may include the logic to perform selected aspects of method 400, and/or to implement one or more of system 300, computing device 104, auxiliary computing device 112, computing device 214, auxiliary computing device 204, and/or any other application, device, apparatus, and/or module discussed herein.

These software modules are generally executed by processor 514 alone or in combination with other processors. Memory 525 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 526 in the storage subsystem 524, or in other machines accessible by the processor(s) 514.

Bus subsystem 512 provides a mechanism for letting the various components and subsystems of computer system 510 communicate with each other as intended. Although bus subsystem 512 is shown schematically as a single bus, alternative implementations of the bus subsystem may use multiple busses.

Computer system 510 can be of varying types including a workstation, server, computing cluster, blade server, server farm, or any other data processing system or computing device. Due to the ever-changing nature of computers and networks, the description of computer system 510 depicted in FIG. 5 is intended only as a specific example for purposes of illustrating some implementations. Many other configurations of computer system 510 are possible having more or fewer components than the computer system depicted in FIG. 5.

In situations in which the systems described herein collect personal information about users (or as often referred to herein, "participants"), or may make use of personal information, the users may be provided with an opportunity to control whether programs or features collect user information (e.g., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

In some implementations, a method implemented by one or more processors is set forth as including operations such as performing automatic speech recognition on streaming audio data, that is captured via one or more microphones of a wearable device worn by a user, to generate a recognized text hypothesis for a partial spoken utterance. The partial spoken utterance is captured in the streaming audio data and is provided by the user as part of a conversation with at least one additional person. The method further includes processing the recognized text hypothesis, using one or more machine learning models, to generate a following content output that indicates one or more features of further content that is predicted to follow the partial spoken utterance. The method further includes determining, based on the following content output, additional text that is predicted to follow the partial spoken utterance. The method further includes determining whether to render the additional text via at least one interface of the auxiliary device. Determining whether to render the additional text is independent of any explicit user interface input that directly solicits rendering and is based on the following content output and/or whether a disfluency is detected following the partial spoken utterance. The method further includes, in response to determining to render the additional text, causing the additional text to be rendered via the at least one interface of the auxiliary device.

These and other implementations of the technology disclosed herein can include one or more of the following features.

In some implementations, determining whether to render the additional text is based on whether the disfluency is detected following the partial spoken utterance. In some of those implementations, determining whether to render the additional text is further based on a measured duration of the disfluency. In some versions of those implementations, determining whether to render the additional text includes determining to render the additional text based on the measured duration satisfying a threshold duration. In some of those versions, determining the additional text occurs prior to the threshold duration being satisfied. In some implementations that determine whether to render the additional text based on the disfluency, the method further includes monitoring for the disfluency. Monitoring for the disfluency can include processing the stream of audio data that follows the partial spoken utterance and/or processing motion sensor data from one or more motion sensors of the auxiliary device.

In some implementations, causing the additional text to be rendered includes causing the additional text to be rendered as speech synthesis output via an audio interface of the auxiliary device. In some of those implementations, the method further includes: detecting, during rendering of the speech synthesis output, voice activity of the user; and in response to detecting the voice activity of the user: halting the rendering of the speech synthesis output.

In some implementations, causing the additional text to be rendered includes causing, based on one or more properties of the additional text, the additional text to be rendered in multiple discrete chunks. In some of those implementations, causing the additional text to be rendered in multiple discrete chunks includes: causing only a first chunk, of the multiple discrete chunks, to be rendered; detecting occurrence, then cessation, of voice activity following rendering of only the first chunk; and in response to detecting the cessation of the voice activity, causing only a second chunk, of the multiple discrete chunks, to be rendered.

In some implementations, determining whether to render the additional text is based on the following content output. In some of those implementations, determining whether to render the additional text based on the following content output includes determining an entropy metric for the additional text determined based on the following content output, and determining whether to render the additional text as a function of the entropy metric. In some versions of those implementations, the entropy metric is based on an inverse document frequency (IDF) measure of one or more terms of the additional text. In some of those versions, the IDF measure is a personalized user metric that is based on frequency of occurrence, in speech recognition hypotheses for the user, for one or more terms of the additional text.

In some implementations, determining whether to render the additional text is based on whether the disfluency is detected and is also based on the following content output.

In some implementations, determining, based on the following content output, the additional text that is predicted to follow the partial spoken utterance includes: determining, based on the following content output, a predicted entity type of the further content that is predicted to follow the partial spoken utterance; performing a search using the predicted entity type and using one or more hypothesis terms of the recognized text hypothesis; and determining the additional text from a resource that is responsive to the search. In some versions of those implementations, the resource that is responsive to the search is a particular database entry, and performing the search using the predicted entity type and the one or more predicted terms comprises: determining the database entry is indexed with both the predicted entity type and the one or more hypothesis terms. In some of those versions, performing the search using the predicted entity type and the one or more hypothesis terms includes: identifying the resource using the one or more hypothesis terms; and extracting, from a superset of text of the resource, the additional text based on the additional text being of the predicted entity type. In some additional or alternative versions of those implementations, performing the search occurs at a client device, that is in communication with the auxiliary device, and performing the search includes searching resources that locally cached at the client device. In some of those versions, the method further includes: determining, based on processing of a prior spoken utterance that preceded the partial spoken utterance, a topic of the conversation; and downloading, at the client device and prior to the partial spoken utterance, at least a portion of the resources that have a defined relationship to the topic. In some additional or alternative versions of those implementations, the following content output indicates initial additional text that differs from the additional text, and determining, based on the following content output, the predicted entity type of the further content includes: identifying an entity type of the additional text. In some additional or alternative versions of those implementations, performing the search includes searching one or more personal resources that are personal to the user. In some versions of those additional or alternative versions, searching the one or more personal resources that are personal to the user includes: verifying that the partial spoken utterance is from the user, and searching the one or more personal resources contingent upon verifying that the partial spoken utterance is from the user.

In some implementations, determining the additional text that is predicted to follow the partial spoken utterance is contingent upon verifying that the partial spoken utterance is from the user. In some of those implementations, verifying that the partial spoken utterance is from the user comprises: performing text-independent speaker verification and/or performing speaker-dependent automatic speech recognition that facilitates generating predicted hypotheses only when audio data is from the user.

In some implementations, a method implemented by one or more processors is set forth as including operations such as processing, by a computing device, audio data of a spoken utterance captured by an auxiliary computing device during an interaction between a user and one or more persons. The user is wearing the auxiliary computing device during the interaction and the auxiliary computing device communicates the audio data to the computing device via a communications channel. The method further includes determining, by the computing device and based on processing the audio data, that the spoken utterance is incomplete and that information, accessible via the computing device, supplements content of the spoken utterance. The method further includes determining, by the computing device, whether one or more features of a context in which the interaction is occurring satisfies one or more conditions for rendering the information to the user via the auxiliary computing device. The method further includes, when the one or more features of the context are determined to satisfy the one or more conditions for rendering the information to the user via the auxiliary computing device: causing, by the computing device, an interface of the auxiliary computing device to render an output that characterizes the information for the user.

These and other implementations of the technology disclosed herein can include one or more of the following features.

In some implementations, determining that the one or more features of the context satisfy the one or more conditions for rendering the information includes: determining, based on processing the audio data, that a disfluency is embodied in the spoken utterance. In some of implementations, determining that the one or more features of the context satisfy the one or more conditions for rendering the information includes determining that the disfluency lasted for at least a threshold duration of time.

In some implementations, determining that the one or more features of the context satisfy the one or more conditions for rendering the information includes: determining that the user performed a verbal gesture indicating that the user is available for receiving suggested content via a suggestion module that is accessible via the computing device.

In some implementations, determining that the one or more features of the context satisfy the one or more conditions for rendering the information includes: determining that the user performed a non-verbal gesture indicating that the user is available for receiving suggested content via a suggestion module that is accessible via the computing device.

In some implementations, the auxiliary computing device is a pair of earbuds and the audio data is captured via an audio input interface of at least one earbud of the pair of earbuds.

In some implementations, the auxiliary computing device is computerized eyeglasses and the audio data is captured via an audio input interface of the computerized eyeglasses, and the output is rendered via a display interface of the computerized eyeglasses.

In some implementations, determining that the information accessible via the computing device is responsive to the portion of content characterized by the audio data includes: determining, based on processing the audio data using one or more trained machine learning models, that the information corresponds to an entity type of information that one or more other users have previously utilized when responding to a type of inquiry corresponding to the portion of content.

In some implementations, the method further includes, when the one or more features of the context are determined to not satisfy the one or more conditions for rendering the information to the user via the auxiliary computing device: causing, by the computing device, the interface of the auxiliary computing device to bypass rendering the output that characterizes the information for the user.

In some implementations, processing the audio data of the spoken utterance captured by the auxiliary computing device includes: processing the audio data using a transformer neural network model that has been trained using natural language content data.

In some implementations, a method implemented by one or more processors is set forth as including operations such as determining that one or more features of a context of a user satisfy one or more conditions for rendering, without any direct solicitation from the user, information to the user via an auxiliary computing device. The auxiliary computing device is a wearable device that is being worn by the user in the context, and the one or more features of the context indicate that the user or another person is exhibiting a lack of recollection. The method further includes processing, based on the one or more features of the context satisfying the one or more conditions, input data that characterizes one or more inputs captured by the auxiliary computing device via one or more input interfaces of the auxiliary computing device. The further includes determining, based on processing the input data, that particular information accessible via the auxiliary computing device is responsive to a portion of content characterized by the input data. The method further includes causing an output interface of the auxiliary computing device to render, for the user, an output that characterizes the particular information.

These and other implementations of the technology disclosed herein can include one or more of the following features.

In some implementations, the auxiliary computing device includes computerized glasses and the output is rendered via a graphical user interface (GUI) of the computerized glasses. In some implementations, the one or more inputs include an image of the context captured via a camera of the auxiliary computing device.

In some implementations, the auxiliary computing device includes a pair of earbuds and the output is rendered via an audio interface of one or more earbuds of the pair of earbuds.

In some implementations, the one or more features of the context include an audible disfluency captured by an audio interface of the auxiliary computing device.

In some implementations, a method implemented by one or more processors is set forth as including operations such as causing, by an auxiliary computing device, an output interface of the auxiliary computing device to render an output that characterizes information that can be utilized by a user in a current context of the user. The method further includes determining, while the auxiliary computing device is rendering the output, whether the user has provided a spoken utterance that embodies a portion of the information embodied in the output from the auxiliary computing device. The method further includes, when the user is determined to have provided the spoken utterance that embodies at least the portion of the information: causing the output interface of the auxiliary computing device to pause rendering the output that characterizes the information, and causing, when the user is no longer providing the spoken utterance, the output interface of the auxiliary computing device to resume rendering additional output that embodies another portion of the information. The method further includes, when the user is determined to have provided another spoken utterance that does not embody at least the portion of the information: causing the output interface of the auxiliary computing device to stop rendering the output that characterizes the information.

These and other implementations of the technology disclosed herein can include one or more of the following features.

In some implementations, the method further includes processing, prior to causing the output interface to render the output, audio data corresponding to audible sounds in the current context of the user, and processing the audio data includes filtering out certain audible sounds that do not correspond to a voice of the user.

In some implementations, the method further includes generating embedding data that is based on the current context of the user, and causing the output interface to render the output is performed when the embedding data corresponds to an embedding that is a threshold distance from a particular embedding in latent space. In some of those implementations, the particular embedding in latent space is based on a private knowledge graph associated with prior interactions between the user and one or more applications. In some other versions of those implementations, the particular embedding in latent space is based on a public knowledge graph associated with prior interactions between one or more other users and one or more other applications.

In some implementations, the method further includes processing, prior to causing the output interface to render the output, content data using a transformer neural network model that has been trained using natural language content. The content data characterizes audible sound in the current context of the user, and the output is based on processing of the content data.

The specification includes the following clauses:
1. A method implemented by one or more processors, the method comprising:
   performing automatic speech recognition on streaming audio data, that is captured via one or more microphones of a wearable device worn by a user, to generate a recognized text hypothesis for a partial spoken utterance, the partial spoken utterance being captured in the streaming audio data and being provided by the user as part of a conversation with at least one additional person;
   processing the recognized text hypothesis, using one or more machine learning models, to generate a following content output that indicates one or more features of further content that is predicted to follow the partial spoken utterance;
   determining, based on the following content output, additional text that is predicted to follow the partial spoken utterance;
   determining whether to render the additional text via at least one interface of the auxiliary device,
      wherein determining whether to render the additional text is independent of any explicit user interface input that directly solicits rendering and is based on one or both of:
         the following content output, or
         whether a disfluency is detected following the partial spoken
      utterance; and
   in response to determining to render the additional text:
      causing the additional text to be rendered via the at least one interface of the auxiliary device.
2. The method of clause 1, wherein determining whether to render the additional text is based on whether the disfluency is detected following the partial spoken utterance.
3. The method of clause 2, wherein determining whether to render the additional text is further based on a measured duration of the disfluency.
4. The method of clause 3, wherein determining whether to render the additional text comprises determining to render the additional text based on the measured duration satisfying a threshold duration, and wherein determining the additional text occurs prior to the threshold duration being satisfied.
5. The method of any preceding clause, further comprising monitoring for the disfluency, monitoring for the disfluency comprising one or both of:
   processing the stream of audio data that follows the partial spoken utterance, or
   processing motion sensor data from one or more motion sensors of the auxiliary device.
6. The method of any preceding clause, wherein causing the additional text to be rendered comprises causing the additional text to be rendered as speech synthesis output via an audio interface of the auxiliary device, and further comprising:
   detecting, during rendering of the speech synthesis output, voice activity of the user; and
   in response to detecting the voice activity of the user:
      halting the rendering of the speech synthesis output.
7. The method of any of clauses 1-5, wherein causing the additional text to be rendered comprises:
   causing, based on one or more properties of the additional text, the additional text to be rendered in multiple discrete chunks.
8. The method of clause 7, wherein causing the additional text to be rendered in multiple discrete chunks includes:
   causing only a first chunk, of the multiple discrete chunks, to be rendered;
   detecting occurrence, then cessation, of voice activity following rendering of only the first chunk; and
   in response to detecting the cessation of the voice activity, causing only a second chunk, of the multiple discrete chunks, to be rendered.
9. The method of any preceding clause, wherein determining whether to render the additional text is based on the following content output, and wherein determining whether to render the additional text based on the following content output comprises:
   determining an entropy metric for the additional text determined based on the following content output; and
   determining whether to render the additional text as a function of the entropy metric.
10. The method of clause 9, wherein the entropy metric is based on an inverse document frequency (IDF) measure of one or more terms of the additional text.
11. The method of clause 10, wherein the IDF measure is a personalized user metric that is based on frequency of occurrence, in speech recognition hypotheses for the user, for one or more terms of the additional text.
12. The method of any preceding clause, wherein determining whether to render the additional text is based on whether the disfluency is detected and is also based on the following content output.
13. The method of any preceding clause, wherein determining, based on the following content output, the additional text that is predicted to follow the partial spoken utterance comprises:
   determining, based on the following content output, a predicted entity type of the further content that is predicted to follow the partial spoken utterance;
   performing a search using the predicted entity type and using one or more hypothesis terms of the recognized text hypothesis; and
   determining the additional text from a resource that is responsive to the search.
14. The method of clause 13,
   wherein the resource that is responsive to the search is a particular database entry, and
   wherein performing the search using the predicted entity type and the one or more predicted terms comprises:
      determining the database entry is indexed with both the predicted entity type and the one or more hypothesis terms.
15. The method of clause 14, wherein performing the search using the predicted entity type and the one or more hypothesis terms comprises:
   identifying the resource using the one or more hypothesis terms;
   extracting, from a superset of text of the resource, the additional text based on the additional text being of the predicted entity type.
16. The method of any of clauses 13-15, wherein performing the search occurs at a client device, that is in communication with the auxiliary device, and wherein performing the search comprises searching resources locally cached at the client device.
17. The method of clause 16, further comprising:
   determining, based on processing of a prior spoken utterance that preceded the partial spoken utterance, a topic of the conversation; and
   downloading, at the client device and prior to the partial spoken utterance, at least a portion of the resources that have a defined relationship to the topic.
18. The method of any of clauses 13-17,
   wherein the following content output indicates initial additional text that differs from the additional text, and
   wherein determining, based on the following content output, the predicted entity type of the further content comprises: identifying an entity type of the additional text.
19. The method of any of clauses 13-17, wherein performing the search comprises: searching one or more personal resources that are personal to the user.
20. The method of clause 19, wherein searching the one or more personal resources that are personal to the user includes:
   verifying that the partial spoken utterance is from the user,
   wherein searching the one or more personal resources is contingent upon verifying that the partial spoken utterance is from the user.
21. The method of any of clauses 1-19, wherein determining the additional text that is predicted to follow the partial spoken utterance is contingent upon verifying that the partial spoken utterance is from the user.
22. The method of clause 18 or clause 19, wherein verifying that the partial spoken utterance is from the user comprises:
   performing text-independent speaker verification, and/or
   performing speaker-dependent automatic speech recognition that facilitates generating predicted hypotheses only when audio data is from the user.
23. A method implemented by one or more processors, the method comprising:
   processing, by a computing device, audio data of a spoken utterance captured by an auxiliary computing device during an interaction between a user and one or more persons,
      wherein the user is wearing the auxiliary computing device during the interaction, and the auxiliary computing device communicates the audio data to the computing device via a communications channel;
   determining, by the computing device and based on processing the audio data, that the spoken utterance is incomplete and that information, accessible via the computing device, supplements content of the spoken utterance;
   determining, by the computing device, whether one or more features of a context in which the interaction is occurring satisfies one or more conditions for rendering the information to the user via the auxiliary computing device; and
   when the one or more features of the context are determined to satisfy the one or more conditions for rendering the information to the user via the auxiliary computing device:
      causing, by the computing device, an interface of the auxiliary computing device to render an output that characterizes the information for the user.
24. The method of clause 23, wherein determining that the one or more features of the context satisfy the one or more conditions for rendering the information includes:
   determining, based on processing the audio data, that a disfluency is embodied in the spoken utterance.
25. The method of clause 24, wherein determining that the one or more features of the context satisfy the one or more conditions for rendering the information includes:
   determining that the disfluency lasted for at least a threshold duration of time.
26. The method of clause 23, wherein determining that the one or more features of the context satisfy the one or more conditions for rendering the information includes:
   determining that the user performed a verbal gesture indicating that the user is available for receiving suggested content via a suggestion module that is accessible via the computing device.
27. The method of clause 23, wherein determining that the one or more features of the context satisfy the one or more conditions for rendering the information includes:
   determining that the user performed a non-verbal gesture indicating that the user is available for receiving suggested content via a suggestion module that is accessible via the computing device.
28. The method of clause 23, wherein the auxiliary computing device is a pair of earbuds and the audio data is captured via an audio input interface of at least one earbud of the pair of earbuds.
29. The method of clause 23,
   wherein the auxiliary computing device is computerized eyeglasses and the audio data is captured via an audio input interface of the computerized eyeglasses, and
   wherein the output is rendered via a display interface of the computerized eyeglasses.
30. The method of clause 23, wherein determining that the information accessible via the computing device is responsive to the portion of content characterized by the audio data includes:
   determining, based on processing the audio data using one or more trained machine learning models, that the information corresponds to an entity type of information that one or more other users have previously utilized when responding to a type of inquiry corresponding to the portion of content.
31. The method of clause 23, further comprising:
   when the one or more features of the context are determined to not satisfy the one or more conditions for rendering the information to the user via the auxiliary computing device:
   causing, by the computing device, the interface of the auxiliary computing device to bypass rendering the output that characterizes the information for the user.
32. The method of clause 23, wherein processing the audio data of the spoken utterance captured by the auxiliary computing device includes:
   processing the audio data using a transformer neural network model that has been trained using natural language content data.
33. A method implemented by one or more processors, the method comprising:
   determining that one or more features of a context of a user satisfy one or more conditions for rendering, without any direct solicitation from the user, information to the user via an auxiliary computing device,
      wherein the auxiliary computing device is a wearable device that is being worn by the user in the context, and the one or more features of the context indicate that the user or another person is exhibiting a lack of recollection;
   processing, based on the one or more features of the context satisfying the one or more conditions, input data that characterizes one or more inputs captured by the auxiliary computing device via one or more input interfaces of the auxiliary computing device;
   determining, based on processing the input data, that particular information accessible via the auxiliary computing device is responsive to a portion of content characterized by the input data; and
   causing an output interface of the auxiliary computing device to render, for the user, an output that characterizes the particular information.
34. The method of clause 33, wherein the auxiliary computing device includes computerized glasses and the output is rendered via a graphical user interface (GUI) of the computerized glasses.
35. The method of clause 34, wherein the one or more inputs include an image of the context captured via a camera of the auxiliary computing device.
36. The method of clause 33, wherein the auxiliary computing device includes a pair of earbuds and the output is rendered via an audio interface of one or more earbuds of the pair of earbuds.
37. The method of clause 33, wherein the one or more features of the context include an audible disfluency captured by an audio interface of the auxiliary computing device.
38. A method implemented by one or more processors, the method comprising:
   causing, by an auxiliary computing device, an output interface of the auxiliary computing device to render an output that characterizes information that can be utilized by a user in a current context of the user;
   determining, while the auxiliary computing device is rendering the output, whether the user has provided a spoken utterance that embodies a portion of the information embodied in the output from the auxiliary computing device;
   when the user is determined to have provided the spoken utterance that embodies at least the portion of the information:
      causing the output interface of the auxiliary computing device to pause rendering the output that characterizes the information, and
      causing, when the user is no longer providing the spoken utterance, the output interface of the auxiliary computing device to resume rendering additional output that embodies another portion of the information; and when the user is determined to have provided another spoken utterance that does not embody at least the portion of the information:
         causing the output interface of the auxiliary computing device to stop rendering the output that characterizes the information.
39. The method of clause 38, further comprising:
   processing, prior to causing the output interface to render the output, audio data corresponding to audible sounds in the current context of the user,
   wherein processing the audio data includes filtering out certain audible sounds that do not correspond to a voice of the user.
40. The method of clause 38, further comprising:
   generating embedding data that is based on the current context of the user,
   wherein causing the output interface to render the output is performed when the embedding data corresponds to an embedding that is a threshold distance from a particular embedding in latent space.
41. The method of clause 40, wherein the particular embedding in latent space is based on a private knowledge graph associated with prior interactions between the user and one or more applications.
42. The method of clause 40, wherein the particular embedding in latent space is based on a public knowledge graph associated with prior interactions between one or more other users and one or more other applications.
43. The method of clause 38, further comprising:
   processing, prior to causing the output interface to render the output, content data using a transformer neural network model that has been trained using natural language content,
   wherein the content data characterizes audible sound in the current context of the user, and
   wherein the output is based on processing of the content data.
44. A computer program comprising instructions that when executed by one or more processors of a computing system, cause the computing system to perform the method of any preceding clause.
45. A computing system configured to perform the method of any one of clauses 1 to 43.
46. The computing system of clause 45, wherein the computing system includes an auxiliary device and/or a client device that is separate from, but in communication with, the auxiliary device.
47. The computing system of clause 46, wherein the client device is a smartphone.

## Claims

1. A method implemented by one or more processors, the method comprising:
processing, by a computing device, audio data of a spoken utterance captured by an auxiliary computing device during an interaction between a user and one or more persons,
wherein the user is wearing the auxiliary computing device during the interaction, and the auxiliary computing device communicates the audio data to the computing device via a communications channel;
determining, by the computing device and based on processing the audio data, that the spoken utterance is incomplete and that information, accessible via the computing device, supplements content of the spoken utterance;
determining, by the computing device, whether one or more features of a context in which the interaction is occurring satisfies one or more conditions for rendering the information to the user via the auxiliary computing device; and
when the one or more features of the context are determined to satisfy the one or more conditions for rendering the information to the user via the auxiliary computing device:
causing, by the computing device, an interface of the auxiliary computing device to render an output that characterizes the information for the user.

2. The method of claim 1, wherein determining that the one or more features of the context satisfy the one or more conditions for rendering the information includes:
determining, based on processing the audio data, that a disfluency is embodied in the spoken utterance.

3. The method of claim 2, wherein determining that the one or more features of the context satisfy the one or more conditions for rendering the information includes:
determining that the disfluency lasted for at least a threshold duration of time.

4. The method of any one of the preceding claims, wherein determining that the one or more features of the context satisfy the one or more conditions for rendering the information includes:
determining that the user performed a verbal gesture indicating that the user is available for receiving suggested content via a suggestion module that is accessible via the computing device.

5. The method of any one of the preceding claims, wherein determining that the one or more features of the context satisfy the one or more conditions for rendering the information includes:
determining that the user performed a non-verbal gesture indicating that the user is available for receiving suggested content via a suggestion module that is accessible via the computing device.

6. The method of any one of the preceding claims, wherein the auxiliary computing device is a pair of earbuds and the audio data is captured via an audio input interface of at least one earbud of the pair of earbuds.

7. The method of any one of claims 1 to 5,
wherein the auxiliary computing device is computerized eyeglasses and the audio data is captured via an audio input interface of the computerized eyeglasses, and
wherein the output is rendered via a display interface of the computerized eyeglasses.

8. The method of any one of the preceding claims, wherein determining that the information accessible via the computing device is responsive to the portion of content **characterized by** the audio data includes:
determining, based on processing the audio data using one or more trained machine learning models, that the information corresponds to an entity type of information that one or more other users have previously utilized when responding to a type of inquiry corresponding to the portion of content.

9. The method of any one of the preceding claims, further comprising:
when the one or more features of the context are determined to not satisfy the one or more conditions for rendering the information to the user via the auxiliary computing device:
causing, by the computing device, the interface of the auxiliary computing device to bypass rendering the output that characterizes the information for the user.

10. The method of any one of the preceding claims, wherein processing the audio data of the spoken utterance captured by the auxiliary computing device includes:
processing the audio data using a transformer neural network model that has been trained using natural language content data.

11. A computer program comprising instructions that when executed by one or more processors of a computing system, cause the computing system to perform the method of any one of claims 1 to 10.

12. A computing system configured to perform the method of any one of claims 1 to 10.

13. The computing system of claim 12, wherein the computing system includes an auxiliary device and/or a client device that is separate from, but in communication with, the auxiliary device.

14. The computing system of claim 13, wherein the client device is a smartphone.

15. A computer readable storage medium storing instructions that when executed by one or more processors of a computing system, cause the computing system to perform the method of any one of claims 1 to 10.
